# EUROPÄISCHE PATENTSCHRIFT

(11) **EP 4 080 072 B1**
(45) Veröffentlichungstag und Bekanntmachung des Hinweises auf die Patenterteilung: **18.09.2024**
(21) Anmeldenummer: 22168243.8
(22) Anmeldetag: 13.04.2022
(51) Int. Cl.: F16C 3/02, E06B 9/171, E06B 9/44, E06B 9/40

(54) **WICKELWELLE MIT EINEM WELLENKERN**
WINDING SHAFT WITH A SHAFT CORE
ARBRE D'ENROULEMENT AVEC UN NOYAU D'ARBRE

(30) Priorität: 20.04.2021 DE 102021110013
(43) Veröffentlichungstag der Anmeldung: 26.10.2022
(73) Patentinhaber: WAREMA Renkhoff SE, 97828 Markheidenfeld (DE)
(72) Erfinder: Mauckner, Jörg, 97080 Würzburg (DE); Bachmann, Jens, 97837 Erlenbach (DE)
(74) Vertreter: Boult Wade Tennant LLP

(56) Entgegenhaltungen:
- EP-B1- 1 937 939
- EP-B1- 2 142 458
- DE-A1- 102014 222 895
- DE-U1- 202007 004 845
- US-A1- 2010 187 351
- US-A1- 2019 178 346

## Beschreibung

Die Erfindung betrifft gemäß dem Oberbegriff von Anspruch 1 eine Wickelwelle, die wenigstens eine Hohlwelle und wenigstens einen seitlich darin eingesteckten Wellenkern aufweist, wobei die Wickelwelle sie zum Aufwickeln eines Rollladenpanzers oder Sonnenschutzbehangs einer Sonnenschutzanlage ausgebildet ist.

Bei vielen Arten von Wellen ist es üblich diese mehrteilig auszubilden, um die Herstellung und Montage zu vereinfachen und auch eine Gewichtseinsparung zu erreichen. Beispielsweise ist es üblich, bei Wickelwellen den Wickelbereich durch eine einfache Hohlwelle auszubilden und diese an wenigstens einem Ende mit einem Wellenkern zu versehen, in dem ein Lagerelement angeordnet ist oder der ggf, das Antriebsmoment eines manuellen oder eines motorischen Antriebes auf die Hohlwelle überträgt, um z.B. einen Rollladenpanzer auf- und abzuwickeln. Meist kommen auf den beiden Seiten einer Welle unterschiedliche Typen von Wellenkernen zum Einsatz.

Einfache Lösungen sehen aus Kunststoff hergestellte Wellenkerne vor, die einen der Hohlwelle entsprechenden Außenquerschnitt aufweisen, so dass sie in diese eingesteckt werden können. Diese Wellenkerne sind meist topfartig ausgebildet, wobei sie als Kunststoffspritzgussteil axial entformt werden. Hieraus folgt, dass aus Gründen der Entformbarkeit der Einsteckzapfen leicht konisch ausgeführt sein muss. Dies ist besonders deshalb problematisch, weil die Einstecktiefe der Wellenkerne in die Hohlwelle unterschiedlich ausfallen kann, so dass sich ein mehr oder weniger großes Spiel ergibt. Bei zu knapper Bemessung des Spiels können sich Probleme mit einer unzureichenden Einstecktiefe ergeben, so dass die Montage erschwert sein kann oder die Wellenkerne bereits beim Einstecken beschädigt werden.

Weiterhin ist bei der Konstruktion als Spritzgussteil auch eine Beschränkung hinsichtlich der zur Verfügung stehenden Wandstärken zu berücksichtigen. Hierdurch kann auch die Grundstabilität solcher Teile verschlechtert sein, was insbesondere in Verbindung mit vorhandenem Spiel zu Bewegung zwischen Hohlwelle und Wellenkernen beim Wickeln führen kann. Dieses Walken kann einerseits zu Geräuschen führen, auf die Dauer aber auch zu Materialermüdung mit Ausbrüchen oder auch einem Lösen der Arretierschrauben zwischen Wellenkernen und Hohlwelle führen.

Es gibt auch aufwendigere Lösungen mit mehrteiligen Wellenkernen, bei denen ein federndes Konusteil unter der Kraft einer vorgespannten Feder in die Welle eingedrückt wird oder ein mehrteiliger, aufspreizbarer Wellenkern vorgesehen ist. Derartige Lösungen sind aus der EP 3 611 329 A1, der EP 2 918768 A1 oder der DE 10 2013 000278 B4 bekannt.

Eine mehrteilige, teleskopierbare Wickelwelle für einen Rollladen ist aus der DE 20 2007 004 845 U1 bekannt. Wellenkerne aus anderen Anwendungen sind aus der US 2010/0187351 A1, bekannt. Die EP 2 142 458 B1 beschreibt eine Paraffiniereinrichtung mit einer kreuzförmigen Welle, die EP 1 937 939 B1 eine selbstausrichtende Drehkolbenmaschine, deren Drehkolben bei der Herstellung vertikal entformt wird, die US 2019/0178346 A1 eine bei der Herstellung vertikal zu entformende Antriebswelle und die DE 10 2014 222 895 A1 eine Getriebegehäuse mit einer wabenförmigen Rippenstruktur.

Die Aufgabe der vorliegenden Erfindung besteht darin, einen einfach herzustellenden Wellenkern zu schaffen, der auch bei unterschiedlichen Einstecktiefen einen festen Sitz der Wellenkerne in der Hohlwelle zur Ausbildung einer Wickelwelle ermöglicht.

Erfindungsgemäß wird die Aufgabe durch eine Wickelwelle mit den Merkmalen des Anspruches 1 gelöst.

Durch die um 90° gedrehte Entformungsrichtung ist es nicht mehr möglich, die Außenfläche der Wellenkerne geschlossen auszubilden. Je nach Anordnung der Trennung zwischen den beiden Formteilen sind die Anlageflächen für die Hohlwelle nur noch oder zu wesentlichen Teilen durch die streifenförmigen Stirnflächen der Stege gebildet, die entsprechend der geforderten Außenkontur der Wellenkern profilierte freie Enden aufweisen. Bei einem runden Querschnitt mit mittiger Teilung des Spritzgusswerkzeuges kann dies bedeuten, dass außer den streifenförmigen Stegenden keine weiteren flächigen Anlagebereiche für die Hohlwelle mehr vorhanden sind.

Je nach Materialart kommt das Spritzgussverfahren bei Kunststoffen oder das Druckgussverfahren bei Metallen zum Einsatz.

Parallel zur Entformungsrichtung können aber ohne weiteres seitliche Stege vorgesehen sein, deren Außenflächen Anlageflächen für plane Bereiche des Innenquerschnitts der Hohlwelle bilden.

Die Stege bilden gleichzeitig Verstärkungsrippen für den Wellenkern, so dass sich bei geringem Gewicht auch mit den üblichen Kunststoffen hohe Steifigkeits- und Festigkeitswerte erreichen lassen, zumal die Anzahl und Anordnung der Rippen frei gewählt werden kann.

Es müssen nicht alle Stege mit Stirnflächen zur Bildung des umhüllenden Außenquerschnittes ausgebildet sein. So können z.B. nur einige oder alle in axialer Richtung verlaufenden Stege sich bis zum umhüllenden Außenquerschnitt erstrecken, während andere Stege kürzer ausgebildet sein können. Wenn sich gemäß einer bevorzugten Ausführungsform der Erfindung alle die Außenfläche definierenden Stege in axialer Richtung erstrecken, kann sich ggf. das Einsteckverhalten des Wellenkerns in eine Hohlwelle verbessern, insbesondere, wenn eine Klemmung erreicht werden soll.

Weiterhin kann der umhüllende Außenquerschnitt über die gesamte Länge des Einsteckbereiches des Wellenkernes frei gewählt werden und unterliegt nicht mehr dem Zwang, aus Gründen der Entformbarkeit eine gewisse Konizität vorhalten zu müssen, weil die für die Entformbarkeit erforderlichen Schrägen nun in radialer Richtung über die Breite der sich zu ihren Enden verjüngenden Stege umgesetzt werden können.

Zur Steigerung der Festigkeit des Wellenkerns kann z.B. vorgesehen sein, dass die Stege eine wabenförmige oder taschenförmige Struktur besitzen. Die in Umfangsrichtung oder diagonal hierzu verlaufenden Stege sorgen für eine besonders gute Versteifung ohne wesentliche Erhöhung des Gewichts des Wellenkerns.

Eine besonders gute Festigkeit des Wellenkerns ergibt sich auch dadurch, dass die Stege von einem mittig in dem Wellenkern angeordneten, parallel zur Wellenachse liegenden Mittelsteg senkrecht hervorspringen.

Ein solcher Wellenkern lässt sich ohne Weiteres mittels einer mittig geteilten Spritzgussform herstellen, wobei neben dem die Festigkeit erhöhenden Mittelsteg auch die steiferen, weil kürzeren Stege zu erwähnen sind. Auch sind die Entformungswege beim Entformen kurz, was den Herstellungsvorgang vereinfacht.

Dadurch, dass der Wellenkern einteilig ausführbar ist, können weitere Montageschritte entfallen, der Wellenkern kann nach dem Entformen unmittelbar verbaut werden

Eine besonders bevorzugte Ausführungsform der Erfindung sieht vor, dass zwischen wenigstens zwei mittleren Wandstegen wenigstens ein mittiger Einschraubkanal ausgebildet ist, der axial durchgehend über einen Einsteckbereich ausgebildet ist. Ein solcher Einschraubkanal kann dazu dienen, Radialschrauben mit geeignetem Gewindeaußendurchmesser zur axialen Festlegung der Hohlwelle zu verankern. Da sich der Einschraubkanal über den gesamten Einsteckkanal erstreckt, kann der Wellenkern auch axial stufenlos an der Hohlwelle festgelegt werden. So ist es möglich, die Wellenlängen nicht für jeden Einzelfall auf Maß fertigen zu müssen, sondern eine Bevorratung in einem gewissen Rastermaß, z.B. in 30mm-Schritten vorzusehen.

Hierbei ist eine Weiterbildung der Erfindung in der Weise bevorzugt, dass die Randbereiche des wenigstens einen Einschraubkanals von dem umhüllenden Außenquerschnitt radial nach innen versetzt sind. Die Vertiefung kann genutzt werden, um Teile der Hohlwelle aufzunehmen, z.B. einen Radialvorsprung zur Verdrehsicherung bei konzentrischen Hohlwellen, insbesondere ist sie aber geeignet, die Schraubenköpfe der bereits erwähnten Radialschauben aufzunehmen. Die Hohlwelle kann in diesem Bereich entsprechend ausgebildet sein oder auch erste durch das Eindrehen der Schrauben verformt werden, worauf später noch im Zusammenhang mit der Beschreibung der Welle näher eingegangen wird.

Eine vorteilhafte Weiterbildung der Erfindung sieht vor, dass der umhüllende Außenquerschnitt nicht rein kreisförmig ausgebildet ist., so dass die Wellenkerne bei korrespondierender Ausführung der Querschnitte ohne Weiteres in die Hohlwelle eingesteckt werden können und gleichzeitig auch die Drehmomentübertragung gewährleistet ist. Neben ovalen und eckigen Querschnitten können hierfür z.B. auch an und für sich runde Querschnitte mit einer Mitnehmernut zum Einsatz kommen, in die eine radial nach innen weisende Ausbuchtung der Hohwelle ragt oder komplett runde Querschnitte, welche mit dem Wellenkern radial gesichert werden.

Insbesondere für die im Rollladenbau weit verbreiteten Mehrkantwellen als Wickelwellen, bei denen die Hohlwellen einen entsprechenden Mehrkantquerschnitt aufweisen, ist es zweckmäßig, dass der umhüllende Außenquerschnitt der Wellenkerne als Mehrkantprofil ausgebildet ist.

Eine noch weiter bevorzugte Ausführungsform der Erfindung sieht vor, dass der Wellenkern mittig einen sich wenigstens über einen Teil der Länge axial erstreckenden Kanal mit einem von der Kreisform abweichenden Querschnitt aufweist. Dieser Bereich kann durch einen entsprechend ausgestalteten Kern, ggf. auch Schieber im Spritzgusswerkzeug hergestellt werden und kann als Drehmomentmitnehmer für die Mehrkantwelle eines Antriebsmotors oder manuellen Antriebes dienen.

Um einen festeren Sitz der Hohlwelle auf den Wellenkernen zu erreichen, kann vorgesehen sein, dass die Stege wenigstens teilweise leicht erhöht über den umhüllenden Außenquerschnitt hervorstehen. Hierdurch wird ein axiales Verklemmen erreicht, wobei die Klemmkraft durch die Anzahl der entsprechend erhöht ausgeführten Stege und natürlich die Größe des Überstandes variiert werden kann.

Weiterhin kann es zweckmäßig sein, dass an einer Stirnseite ein Flanschteil angeformt ist. Dieses kann z.B. ein Lager aufnehmen, mit welchem die Welle gelagert ist. Das Flanschteil kann mittels eines Schiebers in dem Spritzgusswerkzeug hergestellt werden. Als Lager kann ein eingepresstes Wälz- oder Gleitlager vorgesehen werden, es ist aber auch möglich, ein Gleitlager unmittelbar an den Wellenkern anzuspritzen.

Der Wellenkern muss nicht einteilig ausgebildet sein. Je nach Anwendungsfall, z.B. beim Einsatz bei sogenannten ZIP-Markisen, kann es von Vorteil sein, dass der Wellenkern zweiteilig ausgebildet ist und in dem Spritzgussteil ein weiteres Teil aufgenommen ist, das axial verstellbar zu dem Spritzgussteil ausgebildet ist.

Abweichend können an den beiden Enden der Wickelwelle unterschiedliche Ausführungsformen der zuvor beschriebenen Wellenkerne zum Einsatz kommen. Beim Einsatz eines Rohmotors, der am Motorkopf einen Lagerring für die Hohlwelle aufweist, kann eine entsprechende Konstruktion auf einer Seite der Wickelwelle oder einer sonstigen Welle einen Wellenkern im Sinne der vorherigen Ausführungen ersetzen.

Besonders bevorzugt ist die Ausbildung der Welle als Wickelwelle in der Weise, dass sie zum Aufwickeln eines Rollladenpanzers oder Sonnenschutzbehangs ausgebildet ist und die Hohlwelle aus einem Blech besteht, dessen Enden mittels einer Falz miteinander verbunden sind, die in einer Ausnehmung des Außenquerschnitts des wenigstens einen Wellenkerns angeordnet ist, und in dem der Falz diametral gegenüberliegenden Bereich der Hohlwelle wenigstens eine Schraube angeordnet ist, die in den Einschraubkanal des wenigstens einen Wellenkerne eingeschraubt ist, wobei das Blech in Richtung des radial nach innen versetzten Randbereiches des Einschraubkanals des wenigstens einen Wellenkerns nach Anspruch 5 verformt ist.

Diese Lösung hat den Vorteil, dass die Wellenkerne zunächst ohne hohen Kraftaufwand in die Hohlwelle eingesetzt werden können und anschließend durch die Verschraubung die Axialsicherung hergestellt wird. Die Köpfe der Schrauben liegen in den vertieften Bereichen und stören daher nicht das Aufwickeln des Rollladenpanzers bzw. des Sonnenschutzbehangs.

Die Verformung des Bleches der Hohlwelle radial nach innen im Bereich der Schrauben kann bereits vor der Montage vorgeformt sein. Es kann aber auch vorgesehen sein, dass der Innenquerschnitt der Hohlwelle vor dem Anziehen der wenigstens einen Schraube ein Spiel zu dem umhüllenden Außenquerschnitten des wenigstens einen Wellenkerns aufweist, das durch das Anziehen der Schraube und die Verformung des Bleches im Bereich des radial nach innen versetzten Randbereichs (28, 30) des Einschraubkanals (42, 44) aufgezehrt ist.

Weitere bevorzugte Maßnahmen im Zusammenhang mit der Wickelwelle sehen vor, dass die Hohlwelle als Mehrkantwelle aus einem entsprechend mehrfach abgekanteten Blech ausgebildet ist und der wenigstens eine Wellenkern einen korrespondierend ausgebildeten Außenquerschnitt aufweist, so dass eine Drehsicherung gebildet ist.

Die Schrauben können Unterkopfrippen aufweisen, die ein Ausdrehen oder Lösen der Schrauben verhindern.

Weitere Merkmale, Einzelheiten und Vorteile der Erfindung ergeben sich aus dem Wortlaut der Ansprüche sowie aus der nachfolgend anhand der Zeichnung beschriebenen Ausführungsbeispiel. Es zeigen:
Fig. 1a und b zwei Schrägansichten eines Wellenkernes aus unterschiedlichen Perspektiven;
Fig. 2 eine Stirnansicht des Wellenkernes von der Lagerseite;
Fig. 3 einen Querschnitt des Wellenkernes in einem Einsteckbereich;
Fig. 4 einen Längsschnitt des Wellenkernes;
Fig. 5 eine Seitenansicht des Wellenkernes in der Entformungsrichtung;
Fig. 6 eine Schrägansicht einer weiteren Ausführungsform eines Wellenkerns;
Fig. 7 einen Längsschnitt des Wellenkerns gemäß Fig. 7;
Fig. 8 eine Stirnansicht des Wellenkerns gemäß Fig. 7 von der Lagerseite;
Fig. 9 einen Querschnitt des Wellenkerns gemäß Fig. 7 im Einsteckbereich;
Fig. 10 einen Querschnitt einer Wickelwelle mit einer auf einen Wellenkern gemäß Fig. 7 lose aufgesteckten Hohlwelle;
Fig. 11 den Querschnitt der Wickelwelle nach Fig. 10 nach der Montage;
Fig. 12 eine vergrößerte Einzelheit Z aus Fig. 11;
Fig. 13 eine Schrägansicht der Wickelwelle mit final auf einem Wellenkern gemäß Fig. 7 montierter Hohlwelle.

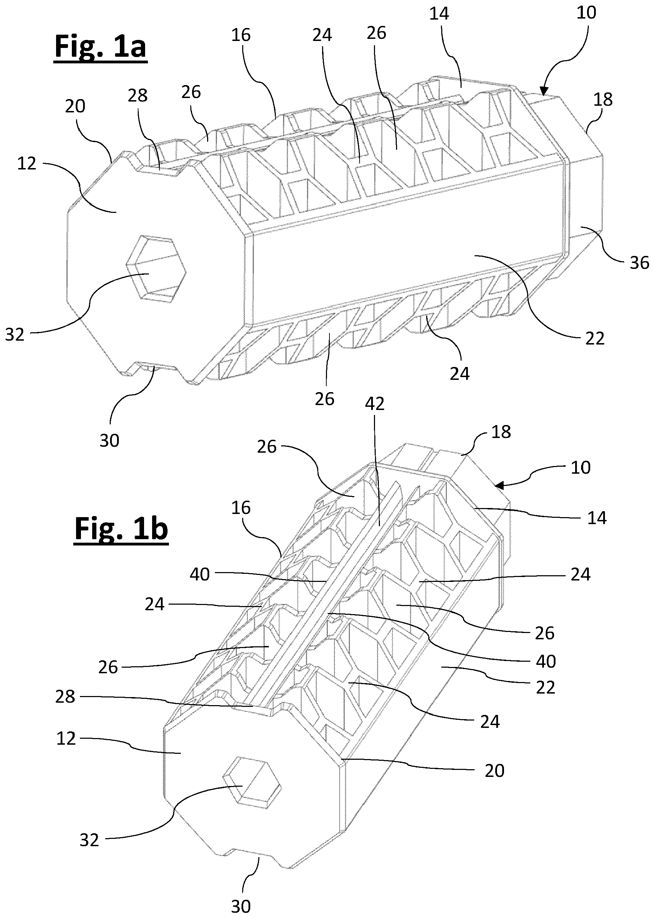

Fig. 1 zeigt einen Wellenkern 10, wie er zum Aufbau einer als Mehrkantwelle ausgebildeten Wickelwelle (nicht gezeigt) für einen Rollladen zum Einsatz kommt. Hierzu werden zwei Wellenkerne 10 von beiden Seiten in eine aus einem mehrfach abgekanteten Blech bestehenden Hohlwelle (nicht gezeigt) eingesteckt und mittels Befestigungsschrauben gesichert. Die Wellenkerne dienen zur Lagerung der Wickelwelle z.B. an Seitenteilen eines Rollladenkastens und zur Übertragung von Antriebsmomenten auf die Wickelwelle. Je nach Konstruktion der Wickelwelle und des Antriebes kann auch nur ein entsprechender Wellenkern 10 zum Einsatz kommen, während auf der anderen Seite ein anderer Wellenkern oder ein elektrischer oder mechanischer Antrieb den gezeigten Wellenkern ersetzen.

Der Wellenkern 10 besteht aus einem Kunststoffteil, das im Spritzgussverfahren hergestellt worden ist. Er weist eine in der Wickelwelle anzuordnende hintere Stirnwand 12, einen sich bis zu einer Zwischenwand 14 erstreckenden Einsteckbereich 16 und einen sich daran anschließenden Flanschbereich 18 auf, mit welchem der Wellenkern an dem bereits erwähnten Seitenteil gelagert wird.

Der Einsteckbereich 16 besitzt einen hier als Achtkant ausgebildeten umhüllenden Außenquerschnitt 20. Er wird hier als umhüllend bezeichnet, weil nur zwei Seitenflächen 22 des Einsteckbereiches 16 als geschlossene Flächen ausgebildet sind. Dies geht darauf zurück, dass die Entformungsrichtung aus dem Spritzgusswerkzeug nicht in axialer Richtung in Bezug auf die Drehachse des Wellkernes 10 erfolgt, sondern senkrecht hierzu parallel zu den beiden Seitenflächen 22. Die übrigen Flächen des Mehrkants werden durch Stirnflächen 24 von ebenfalls parallel zur Entformungsrichtung liegenden Stegen 26 gebildet. Da die Entformungsrichtung quer zur Axialerstreckung liegt, ist es möglich, den Durchmesser des Einsteckbereiches 16 über seine gesamte Länge konstant zu halten, so dass sich ein sicherer Sitz für eine aufzusteckende Hohlwelle ergibt.

Die bereits erwähnte hintere Stirnwand 12 bildet an ihrem Umfang ebenfalls eine dem Außenquerschnitt entsprechende streifenförmige Anlagefläche, die aber zwei sich diametral gegenüberliegende Ausnehmungen 28, 30 aufweist.

Diese Ausnehmungen setzen sich über die Länge des Einsteckbereiches 16 bis zu der Zwischenwand 14 fort, die hier als Beispiel dem umhüllenden Außenquerschnitt des Einsteckbereiches 16 ähnelt, allerdings einen etwas größeren Durchmesser und auch keine Ausnehmungen besitzt. Dadurch bildet die Zwischenwand auch einen Endanschlag für eine aufzusteckende Hohlwelle, wenngleich bei dem Aufbau der Wickelwelle der wenigstens eine Wellenkern 10 nicht unbedingt bis zu diesem Anschlag in die Hohlwelle hineingesteckt wird, sondern nur soweit, bis die gewünschte Länge der Wickelwelle erreicht ist. So lässt sich mit einer Hohlwelle mit einer bestimmten Länge und einem entsprechend ausgebildeten Wellenkern 10 eine relativ großer Längenbereich abdecken, je nachdem, wie weit die Wellenkerne 10 in die Hohlwelle eingesteckt werden, bevor sie axial mit Hilfe von Befestigungsschrauben festgelegt werden.

Wie aus Fig. 1 bis 3 gut zu ersehen ist, ist mittig in dem Wellenkern 10 eine optionale Mehrkantöffnung 32 ausgebildet, was mit Hilfe eines Kerns in der Spritzgussform erfolgen kann, wenn die Teilungsebene des Spitzgusswerkzeuges in der Wellenkernmitte liegt. In die Mehrkantöffnung 32 kann z.B. eine mit einem entsprechenden Außenmehrkant ausgebildete Antriebswelle eines externen Antriebs eingreifen.

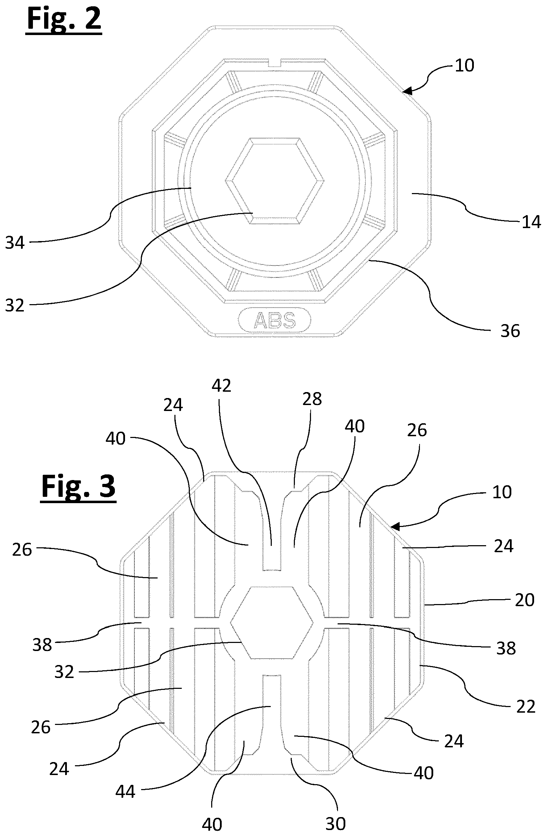

Der Flanschbereich 18 weist einen zylindrischen Innenquerschnitt 34 auf, in welchen der Außenring eines Lagers, z.B. eines Wälzlagers eingesetzt werden kann, dessen Innenring bei der Montage der Wickelwelle in dem Rollladenkasten dann auf einen an einem Seitenteil angeformten oder montierten Lagerzapfen aufgesteckt wird. Dies ist in Fig. 2 gut zu erkennen.

Ein an dem Flanschbereich 18 angeformter Außenachtkant 36 ist kleiner als der Einsteckbereich 16 ausgebildet und kann für die Drehmitnahme durch eine manuell zu bedienende Gurtrolle (nicht gezeigt) genutzt werden.

Fig. 3 zeigt einen Querschnitt des Wellenkernes 10 durch den Einsteckbereich 16. Dieser verdeutlicht die hier im Sinne der Darstellung vertikal verlaufende Entformungsrichtung durch die entsprechend ausgerichteten Stege 26 und Seitenflächen 22. Mittig ist ein Mittelsteg 38 in der Teilungsebene des Spritzgusswerkzeuges senkrecht zur Entformungsrichtung und Wellenachse angeordnet. Dieser versteift die Stege 26, die -wie bereits in Fig. 1a und Fig. 1b gut zu erkennen ist- eine wabenförmige Struktur ausweisen. Auf diese Weise lässt sich bei geringem Gewicht eine sehr hohe Steifigkeit und Festigkeit des Wellenkerns 10 realisieren.

Gut zu erkennen ist auch der über den Einsteckbereich 16 durchgängig ausgebildete Sechskantkanal. Von diesem aus erstrecken sich in der Entformungsrichtung auf beiden Seiten Wandstege 40, die paarweise parallel zueinander als Seitenwandungen jeweils eines Einschraubkanals 42, 44 ausgebildet sind. Die beiden Einschraubkanäle 42, 44 münden jeweils in eine der Ausnehmungen 28, 30.

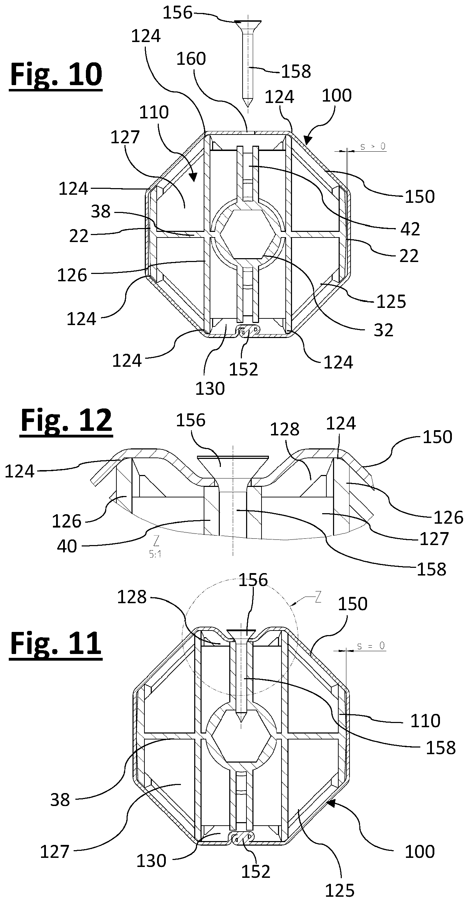

Eine der Ausnehmungen 30 kann eine an der Schließstelle einer aus einem Blechstreifen geformten Hohlwelle liegende Falz (siehe auch Fig. 10 bis 13, Falz 152) aufnehmen, so dass der durch die Falzstärke bedingte Überstand nach innen ausgebildet werden kann. Der Außenquerschnitt bleibt daher frei von Überständen.

In der der Falz diametral gegenüberliegenden Ausnehmung 28 ist eine Verschraubung angeordnet, wobei die Befestigungsschrauben (nicht gezeigt) durch Bohrungen in dem dort liegenden Bereich der Hohlwelle eingedreht sein können. Der Einschraubkanal 42 ist schmäler als der Gewindeaußendurchmesser der Befestigungsschrauben ausgebildet, so dass diese sich beim Eindrehen an beliebiger axialer Stelle sicher in den Wänden des Einschraubkanals 42 einarbeiten können.

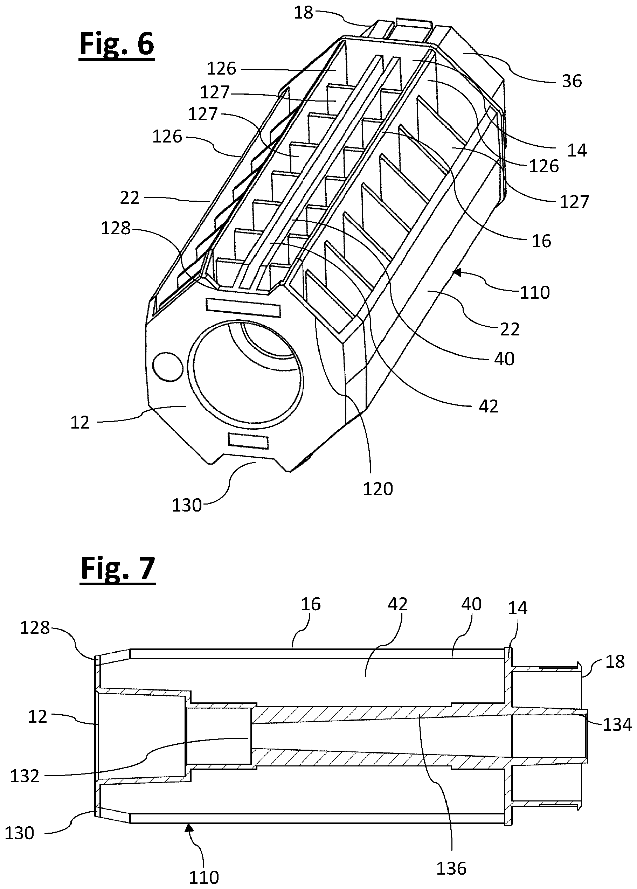

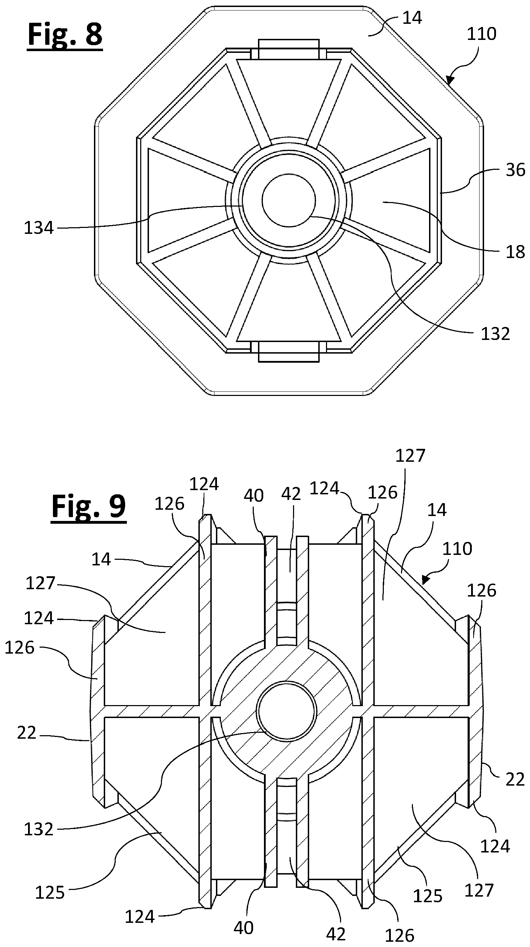

In Fig. 6 bis 9 wird eine weitere Ausführungsform eines Wellenkern 110 vorgestellt, der über eine Reihe von alternativen Gestaltungsmerkmalen verfügt, die aber in beliebiger einzeln oder in Kombination auch bei der vorstehend erläuterten Ausführungsform die dortigen Konstruktionsmerkmale ersetzen können, wenn dies von der Anwendung her für den Fachmann geboten erscheint. Konstruktiv im wesentlichen unveränderte Elemente erhalten die gleichen Bezugseichen wie bei der zuvor vorgestellten Variante.

Zunächst erstrecken sich bei dieser Ausführungsform des Wellenkerns 110 nur die in Längsrichtung des Wellenkerns 110 verlaufenden Stege 126 radial derart weit nach außen, dass ihre Stirnflächen 124 Teil des umhüllenden Außenquerschnittes 120 bilden können, während die zwischenliegenden, die axial verlaufenden Stege 126 in Querrichtung taschenartig versteifenden Querstege 127 und auch die Wandstege 40 mit ihren Rändern radial zurückgesetzt enden. Hierdurch ergeben sich in axialer Richtung durchgängige Anlagenflächen für eine Hohlwelle 150 (siehe Fig. 10 ff.).

Als weiteres hier alternativ ausgestaltetes Merkmal ist die Rechteckform der Taschen zwischen den Stegen 126, 127 zu nennen.

Die mittige Öffnung 132 ist hier kreisrund ausgebildet, eignet sich also nicht zur Drehmomentübertragung. Da Wellenkerne der hier erörterten Art oftmals nur auf der Seite einer Wickelwelle 100 zum Einsatz kommen, auf der kein Motor oder manueller Antrieb vorhanden ist, also eine reine Lagerung der Wickelwelle zu besorgen ist, ist ein von der Kreisform abweichender mittiger Querschnitt der Wellenkerne zur Drehmomentübertragung aber auch oft entbehrlich.

Auf der Lagerseite ist der Wellenkern 110 auch nicht mit einer Aufnahme für ein Wälzlager ausgebildet, sondern es ist unmittelbar der Außenring 134 eines Gleitlagers an den Wellenkern 110 angeformt.

Gut zu erkennen ist in dem Längsschnitt in Fig. 7 auch eine Entformungsschräge 136 im Bereich der mittigen Öffnung 132 erkennbar, die trotz der senkrecht zur Wellenachse liegenden Hauptentformungsrichtung für den mittig in der Form axial beweglich anzuordnenden Schieber erforderlich ist.

Das Blech der Hohlwelle 150 kann in dem Bereich der Verschraubungen punktuell oder über eine größere Länge 151 radial nach innen verformt sein, so dass der Kopf 156 der Befestigungsschraube 158 nach dem Eindrehen versenkt im umhüllenden Außenquerschnitt liegt (siehe hierzu auch Fig, 11 bis 13).

Es ist auch eine Variante möglich bei der die Hohlwelle 150 zunächst mit Spiel auf den Wellenkern 10 aufgesetzt wird. Durch das nachfolgende Anziehen der Schrauben in der gewünschten relativen Axialstellung wird das Blech dann durch den Kopf der Befestigungsschraube in die Ausnehmung 42 gedrückt, wodurch das Spiel aufgezehrt wird. Bei dieser Variante kann die Verwendung mehrerer Schrauben pro Wellenkern 10 vorteilhaft sein, um das Spiel nicht nur punktuell zu beseitigen.

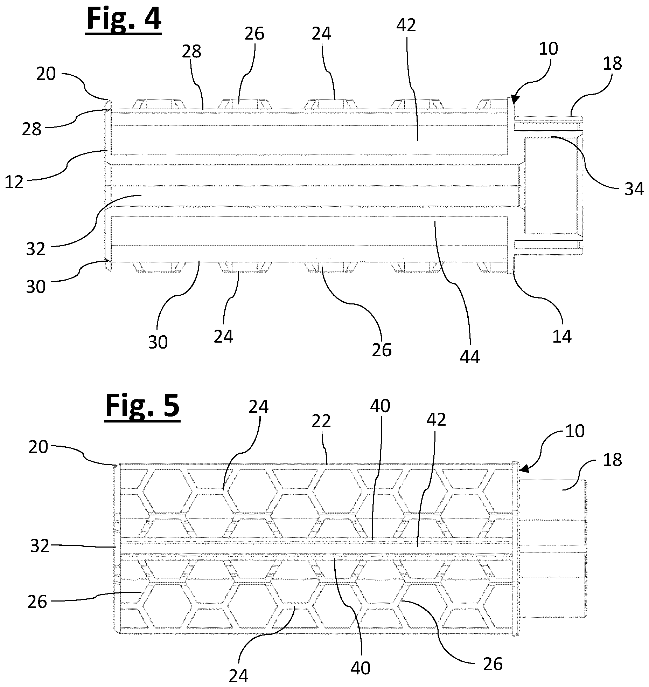

Diese Art der Montage wird in Fig. 10 bis 13 anhand von Querschnitten und einer Schrägansicht der Wickelwelle mit auf dem Wellenkern 110 gemäß Fig. 6 bis 9 montierter Hohlwelle 150 veranschaulicht, wobei der Wellenkern 110 hier eine mittige Mehrkantöffnung 32 entsprechend der Ausführungsform gemäß Fig. 1 bis 5 aufweist als Beispiel für die Tauschbarkeit der Einzelmerkmale.

In Fig. 10 ist ein Querschnitt des in die Hohlwelle 150 mit Spiel s eingestecktem Wellenkern 110 gezeigt. Eine Befestigungsschraube 158 ist noch nicht eingedreht, hierzu verfügt die Hohlwelle 150 auf ihrer der Falz 152 diametral gegenüberliegenden Fläche 154 des Mehrkants eine Befestigungsbohrung 160. Die Falz 152 liegt hierbei in der unteren Ausnehmung 130 des Wellenkerns 110.

Durch Eindrehen und Festziehen der Befestigungsschraube 158 wird das Blech der Hohlwelle 150 im Bereich der oberen Ausnehmung 128 nach innen verformt, bis es sich von der Oberseite auf die Enden der Wandstege 40 des Einschraubkanals 42 anlegt. Hierbei wird durch die Verformung auch das Spiel s aufgezehrt, so dass die Hohlwelle 150 nach dem Festziehen der Befestigungsschraube 158 spielfrei mit dem Wellenkern 110 verklemmt ist.

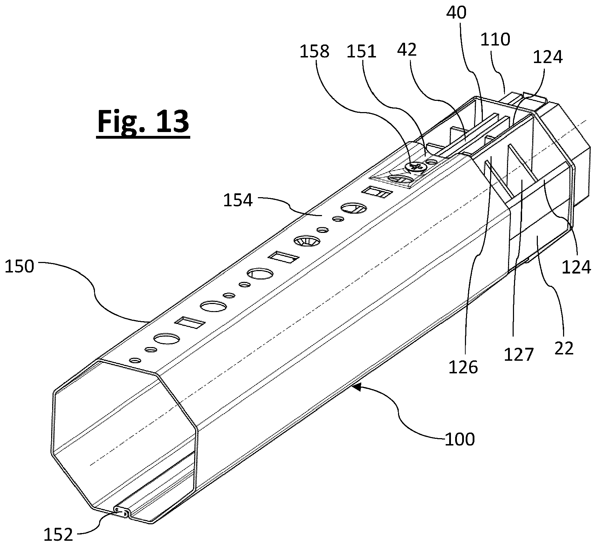

Fig. 13 zeigt eine Schrägansicht der Wickelwelle 100 mit dem fertig montierten Wellenkern 110. Gut erkennbar ist hier die infolge des Anziehens der Schraube in die Ausnehmung 128 des Wellenkerns 110 radial nach innen verformte Absenkung 151.

Die Erfindung ist nicht auf eine der vorbeschriebenen Ausführungsformen beschränkt, sondern in vielfältiger Weise abwandelbar. Sämtliche aus den Ansprüchen und der Beschreibung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

Die Erfindung ist durch die beigefügten Ansprüche definiert.

### Bezugszeichen liste

- 10: Wellenkern
- 12: Hintere Stirnwand
- 14: Zwischenwand
- 16: Einsteckbereich
- 18: Flanschbereich
- 20: Umhüllender Außenquerschnitt
- 22: Seitenflächen
- 24: Stirnflächen
- 26: Stege
- 28, 30: Ausnehmungen
- 32: Mittige Mehrkantöffnung
- 34: Zylindrischer Innenquerschnitt
- 36: Außenmehrkant des Flanschbereichs
- 38: Mittelsteg
- 40: Wandstege
- 42, 44: Einschraubkanäle
- 100: Wickelwelle
- 110: Wellenkern
- 120: Umhüllender Außenquerschnitt
- 124: Stirnflächen der Längsstege
- 125: zurückgesetzte Ränder der Querstege
- 126: Längsstege
- 127: Querstege
- 128,: 130 Ausnehmungen
- 132: kreisförmige mittige Öffnung
- 134: Außenring Gleitlager
- 136: Entformungsschräge
- 150: Hohlwelle
- 151: Absenkung
- 152: Falz
- 154: Mehrkantfläche
- 156: Schraubenkopf
- 158: Befestigungsschraube
- 160: Befestigungsbohrung

## Patentansprüche

1. Wickelwelle, die wenigstens eine Hohlwelle (150) und wenigstens einen seitlich darin eingesteckten Wellenkern (10; 110) aufweist, wobei die Wickelwelle zum Aufwickelr eines Rollladenpanzers oder Sonnenschutzbehangs einer Sonnenschutzanlage ausgebildet ist, **dadurch gekennzeichnet, dass** wenigstens einer der Wellenkerne (10; 110) als Spritzgussteil oder Druckgussteil mit senkrecht zur Wellenachse liegender Entformungsrichtung ausgebildet ist, wobei ein umhüllender Außenquerschnitt (20) des Wellenkerns (10) wenigstens teilweise durch streifenartige Stirnflächen (24) von Stegen (26) gebildet ist, die parallel zur Entformungsrichtung ausgerichtet sind..

2. Wickelwelle nach Anspruch 1, **dadurch gekennzeichnet, dass** die Hohlwelle (150) aus einem Blech besteht, dessen Enden mittels einer Falz (152) miteinander verbunden sind, die in einer Ausnehmung (30) des Außenquerschnitts (20; 120) des wenigstens einen Wellenkerns (10; 110) angeordnet ist, und in dem der Falz (152) diametral gegenüberliegenden Bereich (154) der Hohlwelle (150) wenigstens eine Schraube (158) angeordnet ist, die in den Einschraubkanal (42, 44) des wenigstens einen Wellenkerne (10) eingeschraubt ist, wobei das Blech in Richtung des radial nach innen versetzten Randbereiches des Einschraubkanals (42, 44) des wenigstens einen Wellenkerns (10) verformt ist.

3. Wickelwelle nach Anspruch 2, **dadurch gekennzeichnet, dass** der Innenquerschnitt der Hohlwelle (150) vor dem Anziehen der wenigstens einen Schraube (158) ein Spiel zu dem umhüllenden Außenquerschnitt (20; 120) des wenigstens einen Wellenkerns (10; 110) aufweist, das durch das Anziehen der Schraube (158) und die Verformung des Bleches im Bereich des radial nach innen versetzten Randbereichs (28, 30) des Einschraubkanals (42, 44) aufgezehrt ist.

4. Wickelwelle nach einem der Ansprüche 1 bis 3, **dadurch gekennzeichnet, dass** die Hohlwelle als Mehrkantwelle aus einem entsprechend mehrfach abgekanteten Blech ausgebildet ist und der wenigstens eine Wellenkern (10; 110) einen korrespondierend ausgebildeten Außenquerschnitte (20; 120) aufweist, so dass eine Drehsicherung gebildet ist.

5. Wickelwelle nach einem der vorhergehenden Ansprüche, **dadurch gekennzeichnet, dass** die Stege (26; 126, 127) eine waben- oder rechteckförmige, taschenähnliche Struktur besitzen.

6. Wickelwelle nach einem der vorhergehenden Ansprüche, **dadurch gekennzeichnet, dass** die Stege (26; 126, 127) von einem mittig in dem Wellenkern (10; 110) angeordneten, parallel zur Wellenachse liegenden Mittelsteg (38) senkrecht hervorspringen.

7. Wickelwelle nach einem der vorhergehenden Ansprüche, **dadurch gekennzeichnet, dass** zwischen zwei mittleren Wandstegen (40) wenigstens ein mittiger Einschraubkanal (42, 44) ausgebildet ist, der axial durchgehend über einen Einsteckbereich (16) ausgebildet ist.

8. Wickelwelle nach Anspruch 7, **dadurch gekennzeichnet, dass** die Randbereiche des wenigstens einen Einschraubkanals (42, 44; 142, 144) von dem umhüllenden Außenquerschnitt (20; 120) radial nach innen versetzt sind.

9. Wickelwelle nach einem der vorhergehenden Ansprüche, **dadurch gekennzeichnet, dass** der umhüllende Außenquerschnitt (20; 120) von einer reinen Kreisform abweichend ausgebildet ist.

10. Wickelwelle nach Anspruch 9, **dadurch gekennzeichnet, dass** der umhüllende Außenquerschnitt (20; 120) als Mehrkantprofil ausgebildet ist.

11. Wickelwelle nach einem der vorhergehenden Ansprüche, **dadurch gekennzeichnet, dass** er mittig einen sich wenigstens über einen Teil der Länge axial erstreckenden Kanal (32) mit einem von der Kreisform abweichenden Querschnitt aufweist.

12. Wickelwelle nach einem der vorhergehenden Ansprüche, **dadurch gekennzeichnet, dass** die Stege (26; 126) wenigstens teilweise leicht erhöht über den umhüllenden Außenquerschnitt (20; 120) hervorstehen.

13. Wickelwelle nach einem der vorhergehenden Ansprüche, **dadurch gekennzeichnet, dass** an einer Stirnseite ein Flanschteil (18) angeformt ist.

14. Wickelwelle nach einem der vorhergehenden Ansprüche, **dadurch gekennzeichnet, dass** der Wellenkern zweiteilig ausgebildet ist und in dem Spritzgussteil ein weiteres Teil aufgenommen ist, das axial verstellbar zu dem Spritzgussteil ausgebildet ist.

15. Wickelwelle nach einem der Ansprüche 2, 3 oder 4 bis 14, wenn auch auf 2 oder 3 rückbezogen, **dadurch gekennzeichnet, dass** die Schrauben (158) Unterkopfrippen aufweisen, die ein Ausdrehen oder Lösen der Schrauben verhindern.

## Claims

1. Winding shaft which has at least one hollow shaft (150) and at least one shaft core (10; 110) plugged laterally therein, wherein the winding shaft is designed for winding up a roller shutter curtain or sun-protection curtain of a sun-protection apparatus, **characterised in that** at least one of the shaft cores (10; 110) is designed as an injection-moulded part or pressure-moulded part with a demoulding direction perpendicular to the shaft axis, wherein an enveloping outer cross-section (20) of the shaft core (10) is formed at least partially by strip-shaped end faces (24) of webs (26) which are aligned parallel to the demoulding direction.

2. Winding shaft according to claim 1, **characterised in that** the hollow shaft (150) consists of a metal sheet, the ends of which are connected to one another by means of a fold (152) which is arranged in a cutout (30) of the outer cross-section (20; 120) of the at least one shaft core (10; 110), and in the region (154) of the hollow shaft (150) diametrically opposite the fold (152) is arranged at least one screw (158) which is screwed into the screw-in-channel (42, 44) of the at least one shaft core (10), wherein the metal sheet is deformed in the direction of the edge region, offset radially to the inside, of the screw-in channel (42, 44) of the at least one shaft core (10).

3. Winding shaft according to claim 2, **characterised in that** the inner cross-section of the hollow shaft (150) prior to the tightening of the at least one screw (158) has a play with regard to the enveloping outer cross-section (20; 120) of the at least one shaft core (10; 110), which play is removed by means of the tightening of the screw (158) and the demoulding of the metal sheet in the region of the edge region (28, 30) of the screw-in channel (42, 44) offset radially to the inside.

4. Winding shaft according to any of claims 1 to 3, **characterised in that** the hollow shaft is in the form of a polygonal shaft made of a metal sheet which is accordingly bent multiple times, and the at least one shaft core (10; 110) has a correspondingly formed outer cross-section (20; 120) such that an anti-rotation means is formed.

5. Winding shaft according to any of the preceding claims, **characterised in that** the webs (26; 126, 127) have a honeycomb-shaped or rectangular pocket-like structure.

6. Winding shaft according to any of the preceding claims, **characterised in that** the webs (26; 126, 127) protrude perpendicularly from a central web (38) arranged in the centre of the shaft core (10; 110) and situated parallel to the shaft axis.

7. Winding shaft according to any of the preceding claims, **characterised in that** between two central wall webs (40) is formed at least one central screw-in channel (42, 44) which is formed axially continuous across a plug-in region (16).

8. Winding shaft according to claim 7, **characterised in that** the edge regions of the at least one screw-in channel (42, 44; 142, 144) are offset radially to the inside from the enveloping outer cross-section (20; 120).

9. Winding shaft according to any of the preceding claims, **characterised in that** the enveloping outer cross-section (20; 120) is designed to deviate from a purely circular shape.

10. Winding shaft according to claim 9, **characterised in that** the enveloping outer cross-section (20; 120) is designed as a polygonal profile.

11. Winding shaft according to any of the preceding claims, **characterised in that** it has in its centre a channel (32), extending axially at least across a part of the length, having a cross-section which deviates from the circular shape.

12. Winding shaft according to any of the preceding claims, **characterised in that** the webs (26; 126) protrude partially in a slightly raised manner above the enveloping outer cross-section (20; 120).

13. Winding shaft according to any of the preceding claims, **characterised in that** a flange part (18) is formed on an end face.

14. Winding shaft according to any of the preceding claims, **characterised in that** the shaft core is in two parts and in the injection-moulded part is accommodated a further part which is designed so as to be able to be axially displaceable with regard to the injection-moulded part.

15. Winding shaft according to any of claims 2, 3 or 4 to 14, when back-reference is made to 2 or 3, **characterised in that** the screws (158) have under-head-ribs which prevent unscrewing or releasing of the screws.

## Revendications

1. Arbre d'enroulement qui présente au moins un arbre creux (150) et au moins un noyau d'arbre (10 ; 110) inséré latéralement dans celui-ci, dans lequel l'arbre d'enroulement est conçu pour enrouler un tablier de volet roulant ou un rideau de protection solaire d'une installation de protection solaire, **caractérisé en ce qu'**au moins un des noyaux d'arbre (10 ; 110) est conçu en tant que pièce moulée par injection ou de pièce moulée sous pression avec une direction de démoulage perpendiculaire à l'axe d'arbre, dans lequel une section transversale extérieure enveloppante (20) du noyau d'arbre (10) est formée au moins partiellement par des surfaces frontales (24) en forme de bandes d'entretoises (26) qui sont orientées parallèlement à la direction de démoulage.

2. Arbre d'enroulement selon la revendication 1, **caractérisé en ce que** l'arbre creux (150) est constitué d'une tôle dont les extrémités sont connectées entre elles au moyen d'un pli (152) qui est formé dans un évidement (30) de la section transversale extérieure (20 ; 120) de l'au moins un noyau d'arbre (10 ; 110), et au moins une vis (158) est disposée dans la zone (154) de l'arbre creux (150) diamétralement opposée au pli (152), vis qui est vissée dans le canal de vissage (42, 44) de l'au moins un noyau d'arbre (10), dans lequel la tôle est déformée en direction de la zone de bord décalée radialement vers l'intérieur du canal de vissage (42, 44) de l'au moins un noyau d'arbre (10).

3. Arbre d'enroulement selon la revendication 2, **caractérisé en ce que** la section transversale intérieure de l'arbre creux (150) présente, avant le serrage de l'au moins une vis (158), un jeu par rapport à la section transversale extérieure enveloppante (20 ; 120) de l'au moins un noyau d'arbre (10 ; 110), jeu qui est absorbé par le serrage de la vis (158) et la déformation de la tôle dans la zone de la zone de bord (28, 30) décalée radialement vers l'intérieur du canal de vissage (42, 44).

4. Arbre d'enroulement selon l'une quelconque des revendications 1 à 3, **caractérisé en ce que** l'arbre creux est conçu en tant qu'arbre polygonal à partir d'une tôle pliée plusieurs fois en conséquence et **en ce qu'**au moins un noyau d'arbre (10 ; 110) présente une section transversale extérieure (20; 120) conçue de manière correspondante, de sorte qu'un blocage en rotation soit formé.

5. Arbre d'enroulement selon l'une quelconque des revendications précédentes, **caractérisé en ce que** les entretoises (26 ; 126, 127) comportent une structure en nid d'abeille ou rectangulaire, semblable à une poche.

6. Arbre d'enroulement selon l'une quelconque des revendications précédentes, **caractérisé en ce que** les entretoises (26 ; 126, 127) font saillie perpendiculairement depuis une entretoise centrale (38) disposée au centre du noyau d'arbre (10 ; 110) et parallèle à l'axe d'arbre.

7. Arbre d'enroulement selon l'une quelconque des revendications précédentes, **caractérisé en ce qu'**au moins un canal de vissage central (42, 44) est formé entre deux entretoises de paroi centrales (40), canal qui est formé axialement de manière continue sur une zone d'insertion (16).

8. Arbre d'enroulement selon la revendication 7, **caractérisé en ce que** les zones de bord de l'au moins un canal de vissage (42, 44 ; 142, 144) sont décalées radialement vers l'intérieur par rapport à la section transversale extérieure enveloppante (20 ; 120).

9. Arbre d'enroulement selon l'une quelconque des revendications précédentes, **caractérisé en ce que** la section transversale extérieure enveloppante (20; 120) est conçue pour différer d'une forme purement circulaire.

10. Arbre d'enroulement selon la revendication 9, **caractérisé en ce que** la section transversale extérieure enveloppante (20 ; 120) est conçue en tant que profil polygonal.

11. Arbre d'enroulement selon l'une quelconque des revendications précédentes, **caractérisé en ce qu'**il présente au centre un canal (32) s'étendant axialement sur au moins une partie de la longueur avec une section transversale différente de la forme circulaire.

12. Arbre d'enroulement selon l'une quelconque des revendications précédentes, **caractérisé en ce que** les entretoises (26 ; 126) font saillie de manière au moins partiellement élevée au-dessus de la section transversale extérieure enveloppante (20 ; 120).

13. Arbre d'enroulement selon l'une quelconque des revendications précédentes, **caractérisé en ce qu'**une partie de bride (18) est formée sur une face frontale.

14. Arbre d'enroulement selon l'une quelconque des revendications précédentes, **caractérisé en ce que** le noyau d'arbre est conçu en deux parties et qu'une partie supplémentaire qui est conçue de manière réglable axialement par rapport à la pièce moulée par injection est logée dans la pièce moulée par injection.

15. Arbre d'enroulement selon l'une quelconque des revendications 2, 3 ou 4 à 14, dans la mesure où il se rapporte aux revendications 2 ou 3, **caractérisé en ce que** les vis (158) présentent des nervures sous tête qui empêchent le dévissage ou le desserrage des vis.
